Europäisches Patentamt

European Patent Office

Office européen des brevets

(11) Veröffentlichungsnummer: **0 213 360**
**A1**

## (12) EUROPÄISCHE PATENTANMELDUNG

(21) Anmeldenummer: 86109976.0

(22) Anmeldetag: 21.07.86

(51) Int. Cl.⁴: **B65G 59/06**

(30) Priorität: 06.08.85 AT 2305/85

(43) Veröffentlichungstag der Anmeldung:
11.03.87 Patentblatt 87/11

(84) Benannte Vertragsstaaten:
BE CH DE FR GB IT LI NL SE

(71) Anmelder: **PEM Förderanlagen**
**Alte Poststrasse 98**
**A-8020 Graz(AT)**

(72) Erfinder: **Neukam, Helmut**
**Anton-Brucknerweg 10**
**A-8071 Hausmannstätten(AT)**
Erfinder: **Burget, Ferdinand**
**Raab Nr. 42**
**A-8324 Kirchberg(AT)**
Erfinder: **Grübler, Manfred**
**Unterthal 618**
**A-8051 Graz(AT)**

(74) Vertreter: **Kliment, Peter, Dipl.-Ing. Mag.-Jur.**
**Singerstrasse 8**
**A-1010 Wien(AT)**

(54) **Vorrichtung zum automatischen Entnehmen von Stückgut aus Vorratsmagazinen.**

(57) Die Auswurfvorrichtung (5) einer Vorrichtung zum automatischen Entnehmen von Stückgut (4) aus Vorratsmagazinen (3) ist aus einem parallel zur Auflageebene des Stückgutes (4) verlaufenden Förderbands (27) bzw. Förderkette (7) gebildet, die jeweils endseitig um einen Pneumatikmotor (6) umgelenkt sind. Zur Mitnahme des auszuwerfenden, untersten Stückgutes (4) ist ein mit der Förder kette (7) verbundener Mitnehmer (10) vorgesehen. Die Auswurföffnung (11) ist durch eine Durchschiebesicherung (12) verschließbar, sodaß ein unerwünschter Auswurf des nächstfolgenden Stückgutes (4) ausgeschlossen ist.

Fig. 1

EP 0 213 360 A1

Die Erfindung betrifft eine Vorrichtung zum automatischen Entnehmen von Stückgut aus Vorratsmagazinen mit einer fernsteuerbaren Auswurfvorrichtung und einem darunterbefindlichen Transportband zur Förderung des ausgeworfenen Stückgutes in bereitgestellte Auftragsbehälter.

Es ist -gemäß DE-OS 3213119 -eine Vorrichtung zum automatischen Stapeln, Lagern und Entnehmen von Stückgut bekannt. Dabei wird das Stückgut von einer Rechneranlage gesteuert, Vorratsmagazinen entnommen und in vorbeifahrende Transportbehälter geladen. Die das Stückgut aus dem Vorratsmagazin schiebende Auswurfvorrichtung ist aus einem länglichen, in Längsrichtung der Vorratsmagazine verlaufenden Gehäuse gebildet, in dem ein Auswurfhebel mit einem oberen Fortsatz um eine, quer zur Gehäuselängsrichtung verlaufende Achse, verschwenkbar gelagert ist. Die Schwingbewegung erfolgt durch ein, als Kolben - Zylinder ausgebildetes Betätigungselement. Der Auswurfhebel wird unter Einwirkung einer Schraubenfeder mit seinem gekrümmt ausgebildeten Fortsatz an den Stückgutstapel angepreßt. Sobald das unterste Stückgut durch Verschwenken des Auswurfhebels auf das Förderband fällt, drückt der restliche Stückgutstapel den Auswurfhebel gegen die Kraft der Feder derart nach unten, daß ein Anschlag aus seiner Anschlagposition am Achsblock entfernt wird. Der Hebel wird dabei solange zusammengedrückt, bis das unterste Stück des Stückgutstapels wieder auf den Auflageschienen zu liegen kommt. Eine derartige bekannte Ausführung ist konstruktiv relativ aufwendig und auch störungsanfällig.

Die Aufgabe der vorliegenden Erfindung besteht nun in der Schaffung einer Vorrichtung der eingangs beschriebenen Art, deren Auswurfvorrichtung konstruktiv besonders einfach und weitgehend störungssicher ausgebildet ist.

Diese Aufgabe wird erfindungsgemäß dadurch gelöst, daß die Auswurfvorrichtung aus einem in Auswurfrichtung umlaufenden, als Auflager des darüberbefindlichen Stückgutstapels dienenden Förderband bzw. einer Förderkette gebildet ist, wobei das Förderband, bzw. die Förderkette durch einen vorzugsweise gleichzeitig als Umlenkung dienenden Pneumatikmotor antreibbar ist, dessen Längsachse senkrecht zur Längsachse des Vorratsmagazines verläuft. Mit einer derartig ausgebildeten Auswurfvorrichtung ist bei besonders einfacher Ausbildung eine hohe Störungssicherheit gewährleistet. Der Auswurf des auf der Förderkette bzw. dem Förderband liegenden Stückgutes erfolgt durch Antrieb mit einem Pneumatikmotor besonders rasch, wobei die dazu erforderliche bzw. für eine besondere Wurfparabel gewünschte Auswurfkraft durch Steuerung der Luftzufuhr auf besonders einfache Weise der Größe des Stückgutes bzw.

dessen Gewicht anpassbar ist. Außerdem ist durch die sich in Horizontalebene erstreckende Bauweise der erfindungsgemäßen Auswurfvorrichtung eine platzsparende Anordnung möglich. Auch der Auswurf besonders langen Stückgutes ist durch die erfindungsgemäße Auswurfvorrichtung in besonders vorteilhafter Weise möglich, da die Auswurfrichtung genau in der Berührungsebene von Stückgut und Förderband bzw. -Kette liegt.

Eine bevorzugte Ausführungsform der Erfindung besteht darin, daß in beiden Umlenkbereichen der Auswurfvorrichtung ein etwa zylinderförmiger Pneumatikmotor angeordnet ist, deren Länge jeweils der Breite zweier nebeneinanderliegender Vorratsmagazine entspricht, wobei der eine Pneumatikmotor als Antrieb der dem ersten Vorratsmagazin und als Umlenkung der dem zweiten Vorratsmagazin zugeordneten Förderkette und der andere Pneumatikmotor als Antrieb der dem zweiten Vorratsmagazin und als Umlenkung der dem ersten Vorratsmagazin zugeordneten Förderkette vorgesehen ist . Eine derartige Ausbildung von Zwillings -Vorratsmagazinen mit einer Zwillings - Auswurfvorrichtung ist wirtschaftlich besonders vorteilhaft und konstruktiv einfach ausgebildet.

Gemäß einer anderen Ausführung der Erfindung ist vorgesehen, daß die mit einem zur Auswurfrichtung senkrechten Mitnehmer verbundene Förderkette durch ein zur Längsachse des Pneumatikmotors senkrechtes Kettenrad antreibbar ist. Mit einem Mitnehmer dieser Art ist ein, mit der Bewegung der Förderkette sofort einsetzender, besonders rascher Auswurf des gespeicherten Stückgutes erreichbar, wobei die Förderkette zur Reibungsverminderung lediglich in einem geringen Flächenbereich mit dem nächstfolgendem und durch eine Auswurfsicherung von der Auswurföffnung zurückgehaltenen Stückgut in Kontakt steht. Die Bewegung der Förderkette wird genau nach einer Umdrehung gestoppt, sodaß der Mitnehmer wieder in seiner Ausgangsposition unmittelbar hinter dem untersten Stückgut zu liegen kommt.

Entsprechend einer weitern Variante der Erfindung ist vorgesehen, daß der Förderkette bzw. dem Förderband eine Auswurföffnung zugeordnet ist, die zum Teil durch eine als Durchschiebesicherung ausgebildete Stahlfeder abgedeckt ist, die mit einem z. B. als Mikrotaster ausgebildeten Steurelement in Verbindung steht. Eine derartige Durchschiebesicherung ist besonders einfach und dauerhaft, wobei das unterste Stückgut mit Hilfe des an der Förderkette befestigten Mitnehmers gegen den Widerstand der sich verformenden Stahlfeder ausgeworfen wird.

Schließlich ist noch eine andere vorteilhafte Form der Erfindung dadurch gekennzeichnet, das jeweils einem Vorratsmagazin zugeordnete Förderband zwei parallel zueinander in Transportrichtung verlaufende , in Richtung zum Stapelgut abstehende Stege aufweist. Ein derartiges Förderband eignet sich insbesondere für breiteres Stückgut zur stabilen Auflage desselben auf die beiden voneinander distanzierten Stege.

Im folgenden wird die Erfindung anhand von in der Zeichnung dargestellten Ausführungsbeispielen näher beschrieben. In den Zeichnungen zeigen:

Fig. 1 eine schematische Perspektivansicht einer erfindungsgemäß ausgebildeten Vorrichtung zum automatischen Entnehmen von Stückgut aus Vorratsmagazinen,

Fig. 2 eine schematische Detailansicht der Auswurföffnung,

Fig.3 und 4 eine Seitenansicht bzw. einen Schnitt durch einen Pneumatikmotor,

Fig. 5 einen Längsschnitt durch einen Pneumatikmotor und

Fig. 6 eine Seitenansicht eines Förderbandes gemäß der Erfindung.

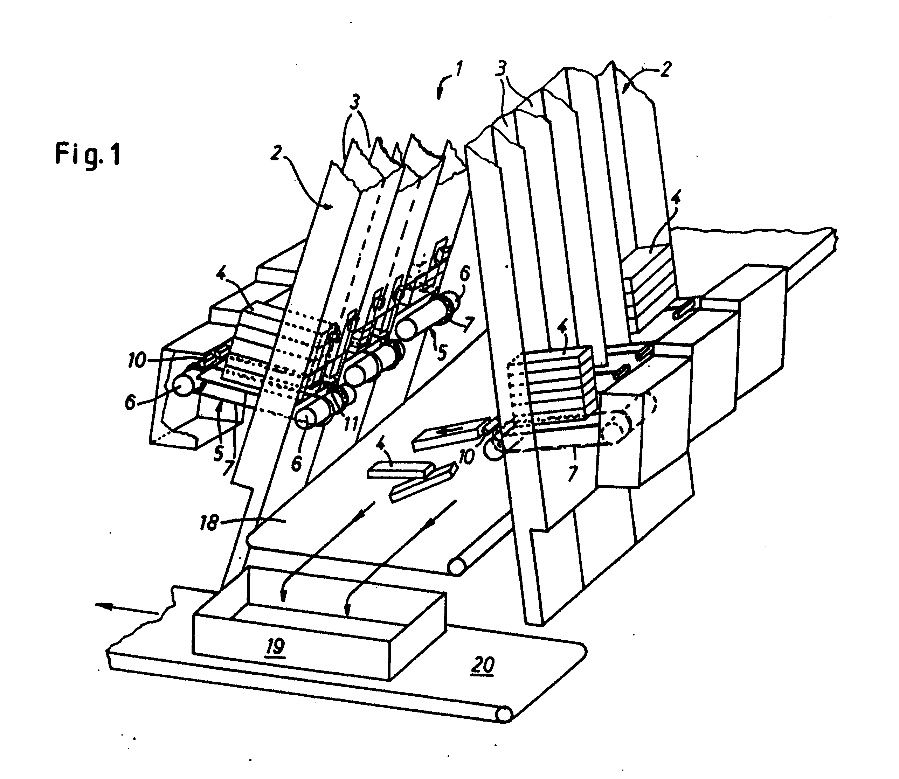

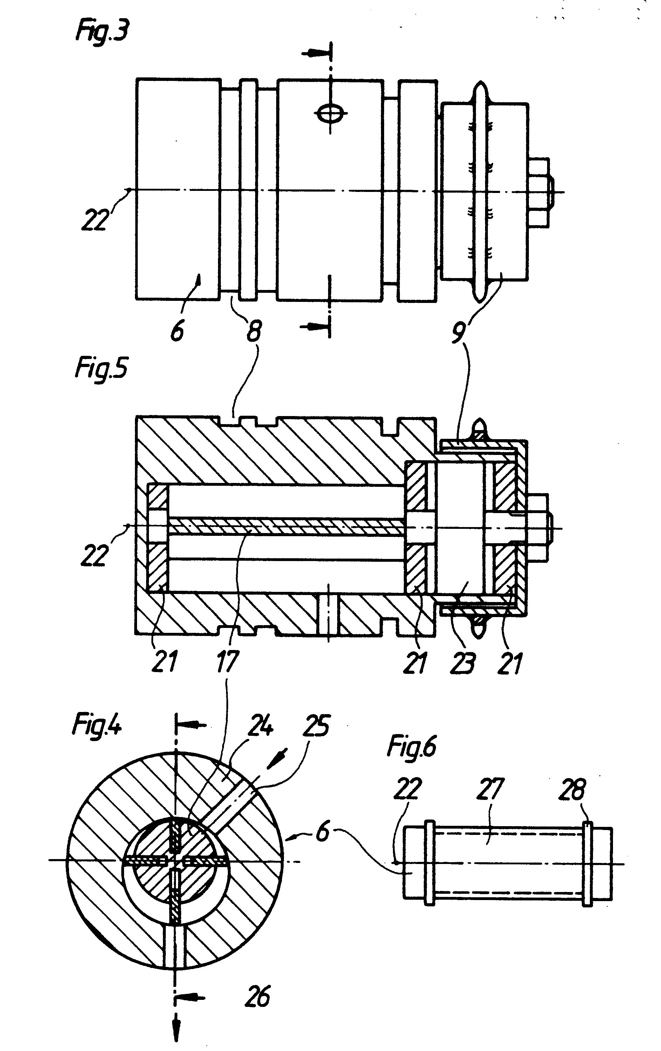

Die in Fig. 1 ersichtliche Vorrichtung (1) besteht aus zwei einander gegenüberliegenden Regalen (2), die sich jeweils aus mehreren nebeneinander angeordneten Vorratsmagazinen (3) zusammensetzen. In jedem dieser Vorratsmagazine (3) ist stapelbares Stückgut (4) gleichen Formates gespeichert. Als Auflage dieses Stückgut-Stapels ist eine Auswurfvorrichtung (5) mit einem Pneumatikmotor - (6) und einer Förderkette (7) vorgesehen. In der dargestellten Ausführung erstreckt sich jede Auswurfvorrichtung (5) jeweils über zwei benachbarte Vorratsmagazine (3), sodaß von einem Zwillings-Vorratsmagazin mit einer Zwillings-Auswurfvorrichtung gesprochen werden kann. Dazu weist jeder Pneumatikmotor (6) eine Kettenführung (8) (Fig. 3) und ein Kettenrad (9) auf. Die beiden jeweils als Umlenkung der Förderkette (7) dienenden Pneumatikmotoren (6)sind zueinander seitenverkehrt angeordnet, sodaß der eine Motor (6) als Antrieb der ersten Förderkette (7) und gleichzeitig als Umlenkung der zweiten Förderkette (7) dient. Jede Förderkette (7) ist mit einem Mitnehmer (10) zur Anlage an der Rückseite des untersten Stückgutes (4) verbunden.

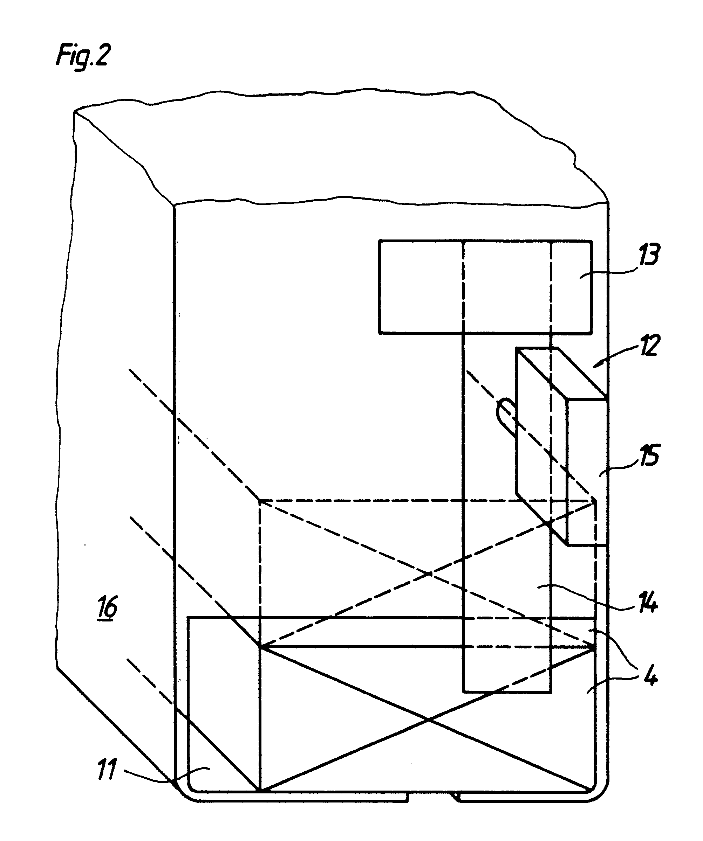

Wie insbesondere in Fig. 2 ersichtlich, ist jeder Auswurföffnung (11) eine Durchschiebesicherung - (12) zugeordnet. Diese besteht aus einer durch eine Klemmplatte (13) am Vorratsmagazin (3) fixierten Stahlfeder (14), die mit einem als Mikrotaster ausgebildeten Steuerelement (15) in Verbindung steht. Diese geringfügig über die Auswurföffnung - (11) vorstehende Stahlfeder (14) verhindert ein Mitnehmen des nach dem Auswurf des untersten Stückgutes (4) nachfolgenden Stückgutes durch die noch in Rotation befindliche Förderkette (7). Das in Fig. 2 ersichtliche Vorratsmagazin (3) ist abweichend von der in Fig. 1 dargestellten Ausführung als Einzelkanal (16) ausgebildet, wobei die dazugehörende Auswurfvorrichtung (nicht dargestellt) aus einem entsprechend langen Pneumatikmotor gebildet und die dazugehörige Förderkette auf der gegenüberliegenden Umlenkstelle durch eine einfache Umlenkrolle umgelenkt ist.

Sobald durch eine entsprechende Steuereinrichtung die Luftzufuhr zum Pneumatikmotor (6) eines bestimmten Vorratsmagazines (3) erfolgt, setzt sich augenblicklich der entsprechende Rotor - (17) mit dem daran befestigten Kettenrad (9) in Bewegung, wodurch die Förderkette (7) mitsamt dem Mitnehmer (10) in Richtung zur Auswurföffnung (11) bewegt wird. Dabei stößt der Mitnehmer (10) an die Rückseite des untersten Stückgutes (4) an und nimmt dieses gegen den Widerstand der Stahlfeder (14) durch die Auswurföffnung (11) mit . Mit der Deformation der Stahlfeder (14) wird der Auswurf des Stückgutes durch das Steuerelement (15)registriert, welches auch anschließend sofort den Pneumatikmotor (6) abschaltet. Sobald das ausgeworfene Stückgut (4) auf ein Förderband (18) und in weiterer Folge in einen Vorratsbehälter (19) fällt, senkt sich der Stückgutstapel automatisch durch sein Eigengewicht auf die noch in Rotation befindliche Förderkette (7) ab. Da die Stahlfeder (14) die Auswurföffnung (11) versperrt, ist ein unerwünschtes durchschieben des nächstfolgenden Stückgutes - (4) zuverlässig ausgeschlossen. Dieses nunmehr auf der Förderkette (7) aufliegende Stückgut (4) kann erst dann ausgeworfen werden, wenn über die Steuereinrichtung wiederum der Pneumatikmotor (6) beaufschlagt und damit der Mitnehmer (10) an die Rückseite des Stückgutes (4) angepresst wird. Da die Zählung der Stückgut-Artikel und die Abschaltung des Pneumatikmotors (6) über ein einziges Steuerelement (15) erfolgt, ist eine erhöhte Betriebssicherheit sowie eine kostengünstigere Ausführung erreichbar. Das am Förderband (18) aufliegende, abgeworfene Stückgut (4) wird in bereitgestellte Vorratsbehälter (19) gefüllt, die in weiterer Folge durch ein Förderband (20) zu weiteren Regalen (2) bzw. zur Verpackungsstelle transportiert werden.

Der im Längsschnitt ersichtliche Rotor (17) in Fig. 5 ist jeweils endseitig durch eine Lagerung - (21) abgestützt und um eine Längsachse (22) drehbar. Zwischen Kettenrad (9) und der Lagerung (21) ist noch ein Getriebe (23) vorgesehen. Der Mantel - (24) des Pneumatikmotors (6) weist eine Lufteinlaß- und Auslaßöffnung (26)bzw. (27) (Fig.4) auf.

Ein in Fig. 6 ersichtliches Förderband (27) ist um einen Pneumatikmotor (6) umgelenkt und weist zwei parallel zueinander verlaufende, abstehende Stege (28) auf.

**Ansprüche**

1. Vorrichtung zum automatischen Entnehmen von Stückgut aus Vorratsmagazinen mit einer fernsteuerbaren Auswurfvorrichtung und einem darunterbefindlichen Transportband zur Beförderung des ausgeworfenen Stückgutes in bereitgestellte Auftragsbehälter, dadurch gekennzeichnet, daß die Auswurfvorrichtung (5) aus einem in Auswurfrichtung umlaufenden , als Auflager des darüberbefindlichen Stückgutes (4) dienenden Förderband (27) bzw. einer Förderkette (7) gebildet ist, wobei das Förderband (27) bzw. die Förderkette (7) durch einem vorzugsweise gleichzeitig als Umlenkung dienenden Pneumatikmotor - (6) antreibbar ist, dessen Längsachse (22) senkrecht zur Längsachse des Vorratsmagazines (3) verläuft.

2. Vorrichtung nach Anspruch 1 dadurch gekennzeichnet, daß in beiden Umlenkbereichen der Auswurfvorrichtung (5) ein etwa zylinderförmiger Pneumatikmotor (6) angeordnet ist, dessen Länge jeweils der Breite zweier nebeneinander liegender Vorratsmagazine (3) entspricht, wobei der eine Pneumatikmotor (6) als Antrieb der dem ersten Vorratsmagazin (3) und als Umlenkung der dem zweiten Vorratsmagazin (3) zugeordneten Förderkette (7) und der andere Pneumatikmotor - (6) als Antieb der dem zweiten Vorratsmagazin (3) und als Umlenkung der dem ersten Vorratsmagazin (3) zugeordneten Förderkette (7) vorgesehen ist.

3. Vorrichtung nach Anspruch 1 oder 2 dadurch gekennzeichnet, daß die mit einem zur Auswurfrichtung senkrechten Mitnehmer (10) verbundene Förderkette (7) durch ein zur Längsachse des Pneumatikmotors (6) senkrechtes Kettenrad (9) antreibbar ist.

4. Vorrichtung nach einem der Ansprüche 1 bis 3 dadurch gekennzeichnet, daß der Förderkette (7) bzw. dem Förderband (27) eine Auswurföffnung - (11) zugeordnet ist , die zum Teil durch eine als Durchschiebesicherung (12) ausgebildete Stahlfeder (14) abgedeckt ist, die mit einem z.B. als Mikrotaster ausgebildeten Steuerelement (15) in Verbindung steht.

5. Vorrichtung nach einem der Ansprüche 1 bis 4, dadurch gekennzeichnet, daß das jeweils einem Vorratsmagazin (3) zugeordnete Förderband (27) zwei parallel zueinander in Transportrichtung verlaufende , in Richtung zum Stapelgut abstehende Stege (28) aufweist.

Fig.1

0 213 360

*Fig.2*

**Fig.3**

**Fig.5**

**Fig.4**

**Fig.6**

| | **EINSCHLÄGIGE DOKUMENTE** | | EP 86109976.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | DE - A1 - 2 824 878 (NIENSTEDT)<br>* Fig. 1 *<br>-- | 1 | B 65 G 59/06 |
| A | DE - A1 - 2 755 390 (SCANDIA)<br>* Fig. 1,5,6,7 *<br>-- | 1 | |
| A | GB - A - 1 395 233 (ELECOMPACK)<br>* Fig. 8 *<br>-- | 1 | |
| A | DE - C - 827 475 (MIGNOT & DE BLOCK)<br>* Fig. *<br>-- | 1 | |
| D,A | DE - A1 - 3 213 119 (KNAPP)<br>* Fig. 3,4 *<br>-- | 1 | RECHERCHIERTE SACHGEBIETE (Int. Cl.4) |
| A | DE - A1 - 3 137 236 (SIEMENS AG)<br>* Fig. *<br>-- | 1 | B 65 G |
| A | DE - A1 - 3 024 602 (HEBENSTREIT GMBH)<br>* Fig. 1 *<br>-- | 1 | |
| A | DE - A1 - 2 109 296 (PROPPER MANU-FACTURING CO.)<br>* Fig. 2 *<br>-- | 1 | |

Der vorliegende Recherchenbericht wurde für alle Patentansprüche erstellt.

| Recherchenort | Abschlußdatum der Recherche | Prüfer |
|---|---|---|
| WIEN | 07-11-1986 | PANGRATZ |

Europäisches
Patentamt

# EUROPÄISCHER RECHERCHENBERICHT

| EINSCHLÄGIGE DOKUMENTE | | | EP 86109976.0 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.4)** |
| A | <u>DE - A1 - 2 938 757</u> (GOOSSENS)<br>* Fig. 4 *<br><br>---- | 1 | |
| | | | **RECHERCHIERTE SACHGEBIETE (Int. Cl.4)** |
| | Der vorliegende Recherchenbericht wurde für alle Patentansprüche erstellt. | | |

| **Recherchenort**<br>WIEN | **Abschlußdatum der Recherche**<br>07-11-1986 | **Prüfer**<br>PANGRATZ |
|---|---|---|